# EUROPÄISCHE PATENTSCHRIFT

(11) **EP 1 278 955 B1**
(45) Veröffentlichungstag und Bekanntmachung des Hinweises auf die Patenterteilung: **18.04.2007**
(21) Anmeldenummer: 01940143.9
(22) Anmeldetag: 10.04.2001
(51) Int. Cl.: F02M 47/02, F02M 61/16, F16J 15/16

(54) **COMMON-RAIL-INJEKTOR**
COMMON RAIL INJECTOR
INJECTEUR PAR ACCUMULATION DE PRESSION

(30) Priorität: 28.04.2000 DE 10020870
(43) Veröffentlichungstag der Anmeldung: 29.01.2003
(73) Patentinhaber: ROBERT BOSCH GMBH, 70442 Stuttgart (DE)
(72) Erfinder: RUTHARDT, Siegfried, 71155 Altdorf (DE); HANNEKE, Juergen, 70499 Stuttgart (DE); RAPP, Holger, 71282 Hemmingen (DE)
(86) Internationale Anmeldenummer: PCT/DE2001/001406
(87) Internationale Veröffentlichungsnummer: WO 2001/083978

(56) Entgegenhaltungen:
- EP-A- 0 604 915
- EP-A- 0 753 660
- US-A- 5 342 066

## Beschreibung

### Stand der Technik

Die Erfindung betrifft einen Common-Rail-Injektor für ein Kraftstoffeinspritzsystem einer Brennkraftmaschine nach dem Oberbegriff des Anspruchs 1.

In Common-Rail-Einspritzsystemen fördert eine Hochdruckpumpe den Kraftstoff in den zentralen Hochdruckspeicher, der als Common-Rail bezeichnet wird. Von dem Hochdruckspeicher führen Hochdruckleitungen zu den einzelnen Injektoren, die den Motorzylindern zugeordnet sind. Die Injektoren werden einzeln jeweils über ein Steuerventil von der Motoreleketronik angesteuert. Wenn das Steuerventil öffnet, gelangt mit Hochdruck beaufschlagter Kraftstoff an der gegen die Vorspannkraft einer Schließfeder angehobenen Düsennadel vorbei in den Verbrennungsraum.

Bei herkömmlichen Injektoren, wie sie z.B. in der EP 0 604 915 B1 beschrieben sind, wird als Dichtelement ein weicher Dichtring verwendet.

Aus der US 5,342,066 ist ein Elastomer-Dichtring mit je einer Stützeinrichtung zu beiden Seiten des Dichtrings bekannt. Diese Anordnung wird bei Anlagen zur Erdölförderung eingesetzt.

Zwischen den Stützeinrichtungen sind Spannschrauben vorgesehen. Diese Spannschrauben durchdringen auch den Dichtring in axialer Richtung. Die Bohrungen in den Stützeinrichtungen durch die die Spannschrauben ragen, sind als Blattfedern ausgebildet.

In entspanntem Zustand dieser Blattfedern ist zwischen den Spannschrauben und den Bohrungen Spiel vorhanden. Wenn die Spannschrauben angezogen werden, verformen sich die Blattfedern so, dass sich der Durchmesser der Bohrungen verringert und der Spalt zwischen den Spannschrauben und den Bohrungen im Stützring verschwindet.

Am Außendurchmesser der Stützeinrichtungen ist ein zylindrischer Wandabschnitt ausgebildet, der bei Anziehen der Spannschrauben durch den Dichtring nach außen gedrängt wird, bis er sich in Anlage an einer Bohrungswand befindet.

Nachteilig an dieser Anordnung ist deren großer Bauraumbedarf, die aufwändige Fertigung und, dass jede Spannschraube je eine Bohrung im Dichtring als auch den beiden Stützeinrichtungen erfordert, die ihrerseits abgedichtet werden müssen. Schließlich ist auch der Aufwand für die Montage und das Spannen dieser Anordnung sehr groß.
Aufgabe der Erfindung ist es, die Lebensdauer der bekannten Injektoren mit einfachen Mitteln zu erhöhen. Der erfindungsgemäße Injektor soll jedoch trotz höherer Lebensdauer kostengünstig herstellbar sein.

Die Aufgabe ist erfindungsgemäß durch die kennzeichnenden Merkmale des Anspruchs 1 gelöst.

### Vorteile der Erfindung

Bei im Rahmen der vorliegenden Erfindung durchgeführten Versuchen hat sich herausgestellt, dass der weiche Dichtring durch den permanent im Ringraum herrschenden Raildruck in den Spalt zwischen Ventilstück und Injektorgehäuse gepresst wird. Bei extrem hohen Drücken ist es sogar vorgekommen, dass der weiche Dichtring durch den Spalt zwischen Ventilstück und Injektorgehäuse gespült wurde. Durch die erfindungsgemäße Stützeinrichtung wird ein Durchspülen des Dichtelements sicher verhindert. Dadurch ist auch bei extremen Drücken eine hohe Lebensdauer des erfindungsgemäßen Injektors gewährleistet.

Der innere Umfang der Stützscheibe liegt im eingebauten Zustand an dem Ventilstück an und verschließt den Spalt zwischen dem Ventilstück und dem Injektorgehäuse.

Durch die kegelige Ausbildung bekommt die Stützscheibe eine Federwirkung, die sich bei extremen Drücken, insbesondere bei Lastwechseln, als vorteilhaft erwiesen hat. Bei einer axialen Druckbelastung dehnt sich die Stützscheibe in radialer Richtung elastisch aus und verschließt den Spalt zwischen dem Ventilstück und dem Injektorgehäuse dicht.

Eine weitere besondere Ausführungsart der Erfindung ist dadurch gekennzeichnet, dass sich der leicht kegelig ausgebildete innere Umfang der Stützscheibe zum Dichtelement hin oder vom Dichtelement weg verjüngt. In der Praxis hat sich herausgestellt, dass die vorteilhaften Wirkungen der erfindungsgemäßen Stützscheibe nicht nur dann eintreten, wenn sich der innere Umfang der Stützscheibe zum Dichtelement hin verjüngt, sondern auch dann, wenn sich der innere Umfang der Stützscheibe vom Dichtelement weg verjüngt. Dieser Aspekt der Erfindung war ohne Kenntnis der Bedeutung der Federwirkung der Stützscheibe nicht zu erwarten.

Eine weitere besondere Ausführungsart der Erfindung ist dadurch gekennzeichnet, dass die Stützscheibe an ihrem inneren und äußeren Umfang leicht kegelig ausgebildet ist. Durch die Ausbildung der Stützscheibe im Querschnitt als Doppelkegel bekommt die Stützscheibe eine stärkere Federwirkung. Der Doppelkegel kann mit seiner Spitze zum Dichtelement hin- oder vom Dichtelement wegweisend montiert sein.

Eine weitere besondere Ausführungsart der Erfindung ist dadurch gekennzeichnet, dass in der Stützeinrichutng Leckagenuten ausgebildet sind. Durch die Leckagenuten wird eine gezielte Undichtigkeit zwischen der Stützeinrichtung und dem Injektorgehäuse herbeigeführt. Dadurch können geringe Leckageströme, die das Dichtelement passieren, abgeführt werden. Das liefert den Vorteil, dass sich zwischen dem Dichtelement und der Stützeinrichtung kein Druckpolster aufbauen kann. Ein solches Druckpolster könnte nämlich dazu führen, dass sich das Dichtelement in unerwünschter Weise in axialer Richtung verschiebt.

Eine weitere besondere Ausführungsart der Erfindung ist dadurch gekennzeichnet, dass die Leckagenuten auf der von dem Dichtelement abgewandten Seite der Stützeinrichtung vorgesehen sind. Dadurch wird verhindert, dass das Dichtelement im Betrieb in die Leckagenuten gepresst wird und diese verschließt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

### Zeichnung

In der Zeichnung zeigen:
- Figur 1: die Teilansicht eines Längsschnitts durch einen erfindungsgemäßen Injektor mit eingebauter Stützscheibe;
- Figur 2: eine Stützscheibe mit Leckagenuten in der Draufsicht;
- Figur 3: die Ansicht eines Schnitts entlang der Linie III-III in Figur 2 und
- Figur 4: die Ansicht IV in Figur 2.

### Beschreibung der Ausführungsbeispiele

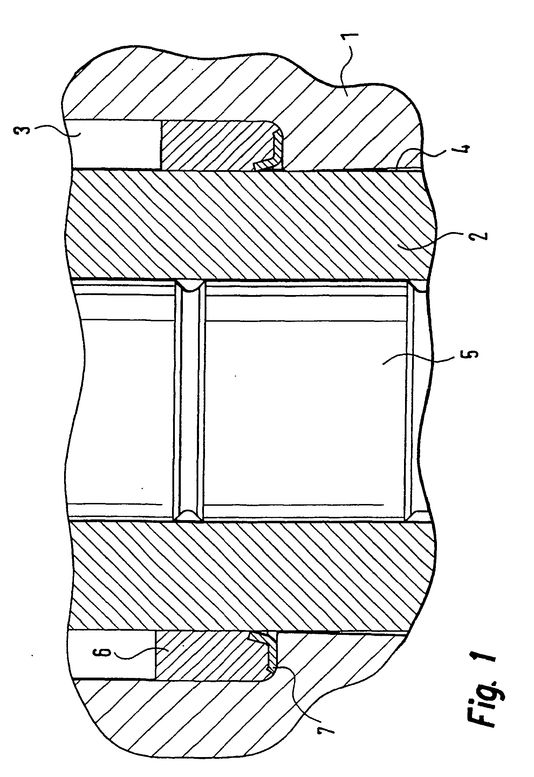

In Figur 1 ist ein Ausschnitt eines erfindungsgemäßen Injektors im Längsschnitt dargestellt. Ein kompletter Längsschnitt durch einen derartigen Injektor ist in Figur 1 der EP 0 604 915 B1 dargestellt. Der Injektor dient dazu, mit Hochdruck beaufschlagten Kraftstoff in den Brennraum einer (nicht dargestellten) Brennkraftmaschine einzuspritzen.

In einem Injektorgehäuse 1 ist ein Ventilstück 2 aufgenommen. Zwischen dem Ventilstück 2 und dem Injektorgehäuse 1 ist ein Ringraum 3 ausgebildet. An dem zum Brennraum gewandten (in Figur 1 unteren) Ende des Ringraums 3 ist fertigungstechnisch bedingt ein Spalt 4 ausgebildet. Der Ringraum 3 wird auch als Ventilvorraum bezeichnet und ist vor dem Zulauf zum Steuerraum angeordnet. Der Ringraum 3 ist stets mit dem vollen Raildruck beaufschlagt.

Im Inneren des Ventilstücks 2 ist eine Steuerstange 5 axial verschiebbar aufgenommen. Die Steuerstange 5 dient zum Steuern der Öffnungs- und Schließbewegung des erfindungsgemäßen Injektors.

Um den Spalt 4 zwischen dem Ventilstück 2 und dem Injektorgehäuse 1 hochdruckdicht zu verschließen ist in dem Ringraum 3 ein weicher Dichtring 6 mit einem rechteckförmigen Querschnitt aufgenommen. Die zum Spalt 4 hin gewandte Stirnfläche des weichen Dichtrings 6 liegt an einer Stützscheibe 7 an. Die Stützscheibe 7 ist aus Blech oder Kunststoff gebildet. Die Stützscheibe 7 ist an ihrem inneren Umfang nach oben gebogen und liegt an dem Ventilstück 2 an. Auf diese Art und Weise wird verhindert, dass der weiche Dichtring 6, wenn sich in dem Ringraum 3 mit Hochdruck beaufschlagter Kraftstoff befindet, in den Spalt 4 gepresst wird.

Der weiche Dichtring 6 und die Stützscheibe 7 können vormontiert und dann zusammen in den erfindungsgemäßen Injektor eingebaut werden. Die Stützscheibe 7 hat eine Stärke von einigen zehntel Millimetern und ist leicht konisch gezogen. Der am inneren Umfang ausgebildete Kegel weist einen sehr stumpfen Kegelwinkel auf.

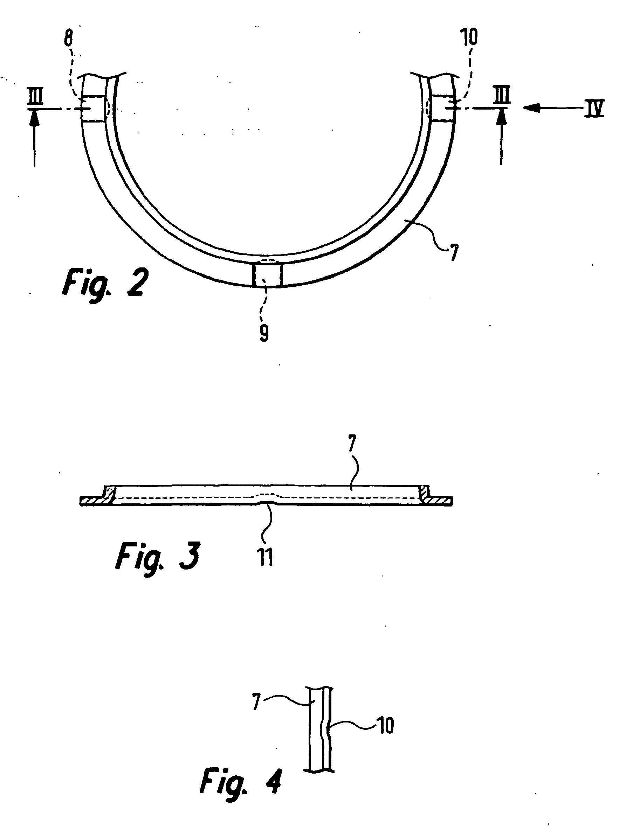

In den Figuren 2 bis 4 ist eine weitere Ausführungsform einer erfindungsgemäßen Stützscheibe 7 in Alleinstellung dargestellt. In der in Figur 2 dargestellten Draufsicht ist gestrichelt angedeutet, dass in der Unterseite der Stützscheibe 7 mehrere Leckagenüten 8, 9 und 10 ausgebildet sind. In der in Figur 3 dargestellten Schnittansicht sieht man, dass der Nutgrund einer Leckagenut 11 nur geringfügig von der Unterseite der Stützscheibe 7 beabstandet ist.
Durch die in der Unterseite der Stützscheibe 7 angebrachten Leckagenuten 7, 8, 9 und 10 wird eine gezielte Undichtigkeit zwischen der Stützscheibe 7 und dem Injektorgehäuse 1 herbeigeführt. Alternativ ist es auch möglich, entsprechende Leckagenuten in der zu der Stützscheibe 7 gewandten Oberfläche des Injektorgehäuses oder des Ventilstücks 2 anzubringen. Durch die Leckagenuten wird gewährleistet, dass geringe Leckageströme, die den weichen Dichtring 6 passieren, nach unten abgeführt werden können.

## Patentansprüche

1. Common-Rail-Injektor für ein Kraftstoffeinspritzsystem einer Brennkraftmaschine, mit einem Injektorgehäuse (1), das mit einem zentralen Hochdruckspeicher in Verbindung steht und in dem eine Düsennadel axial verschiebbar ist, um die Einspritzung in Abhängigkeit von dem Druck in einem Steuerraum einzustellen, und mit einem Dichtelement (6), das in einem Ringraum (3) angeordnet ist, der zwischen einem Ventilstück (2) und dem Injektorgehäuse (1) vorgesehen ist, **dadurch gekennzeichnet, dass** zusätzlich zu dem Dichtelement (6) eine Stützeinrichtung (7) in dem Ringraum (3) zwischen dem Ventilstück (2) und dem Injektorgehäuse (1) angeordnet ist, dass die Stützeinrichtung von einer ringförmigen Stützscheibe (7) gebildet wird, dass die Stützscheibe (7) an ihrem inneren Umfang leicht kegelig ausgebildet ist und in eingebautem Zustand an dem Ventilstück (2) anliegt, dass das Dichtelement (6) und die Stützscheibe als geschlossener Ring ausgebildet sind, und dass die Stützscheibe (7) zur Abstützung des Dichtelements (6) dient.

2. Common-Rail-Injektor nach Anspruch 1, **dadurch gekennzeichnet, dass** die Stützscheibe (7) aus einem metallischen Werkstoff besteht.

3. Common-Rail-Injektor nach einem der vorhergehenden Ansprüche, **dadurch gekennzeichnet, dass** sich der leicht kegelig ausgebildete innere Umfang der Stützscheibe (7) zum Dichtelement (6) hin oder vom Dichtelement (6) weg verjüngt.

4. Common-Rail-Injektor nach einem der vorhergehenden Ansprüche, **dadurch gekennzeichnet, dass** die Stützscheibe (7) an ihrem äußeren Umfang leicht kegelig ausgebildet ist.

5. Common-Rail-Injektor nach einem der vorhergehenden Ansprüche, **dadurch gekennzeichnet, dass** in der Stützeinrichtung (7) Leckagenuten (8, 9, 10, 11) ausgebildet sind.

6. Common-Rail-Injektor nach Anspruch 5, **dadurch gekennzeichnet, dass** die Leckagenuten (8, 9, 10, 11) auf der von dem Dichtelement (6) abgewandten Seite der Stützeinrichtung (7) vorgesehen sind.

## Claims

1. Common rail injector for a fuel injection system of an internal combustion engine, having an injector housing (1) which is connected to a central high pressure accumulator and in which a nozzle needle is axially displaceable in order to adjust the injection as a function of the pressure in a control space, and having a sealing element (6) which is arranged in an annular space (3) which is provided between a valve piece (2) and the injector housing (1), **characterized in that**, in addition to the sealing element (6), a support device (7) is arranged in the annular space (3) between the valve piece (2) and the injector housing (1), **in that** the support device is formed by an annular support disc (7), **in that** the support disc (7) is formed so as to be slightly conical at its inner periphery and bears against the valve piece (2) in the installed state, **in that** the sealing element (6) and the support disc are embodied as a closed ring, and **in that** the support disc (7) serves to support the sealing element (6).

2. Common rail injector according to Claim 1, **characterized in that** the support disc (7) is composed of a metallic material.

3. Common rail injector according to one of the preceding claims, **characterized in that** the slightly conical inner periphery of the support disc (7) narrows towards the sealing element (6) or away from the sealing element (6).

4. Common rail injector according to one of the preceding claims, **characterized in that** the support disc (7) is formed so as to be slightly conical at its outer periphery.

5. Common rail injector according to one of the preceding claims, **characterized in that** leakage grooves (8, 9, 10, 11) are formed in the support device (7).

6. Common rail injector according to Claim 5, **characterized in that** the leakage grooves (8, 9, 10, 11) are provided on that side of the support device (7) which faces away from the sealing element (6).

## Revendications

1. Injecteur «Common Rail» pour un système d'injection de carburant d'un moteur à combustion interne, comportant un boîtier d'injecteur (1), communiquant avec un accumulateur haute pression central et dans lequel une aiguille d'injecteur peut être déplacée axialement pour suspendre l'injection en fonction de la pression dans une chambre de commande, avec dans un espace annulaire (3) un élément d'étanchéité (6) prévu entre un élément de soupape (2) et le boîtier d'injecteur (1),
**caractérisé en ce qu'**
un dispositif de soutien (7) est prévu dans l'espace annulaire (3) entre l'élément de soupape (2) et le boîtier d'injecteur (1) en plus de l'élément d'étanchéité (6), le dispositif de soutien (7) formé par une rondelle de soutien circulaire (7) est réalisé à sa périphérie interne légèrement en forme de cône et est adjacent à l'élément de soupape (2) à l'état installé, l'élément d'étanchéité (6) et la rondelle de soutien ayant une forme d'anneau fermé, et la rondelle de soutien (7) servant de support de l'élément d'étanchéité (6).

2. Injecteur «Common Rail» selon la revendication 1,
**caractérisé en ce que**
la rondelle de soutien (7) se compose d'un matériau métallique.

3. Injecteur «Common Rail» selon l'une quelconque des revendications précédentes,
**caractérisé en ce que**
la périphérie interne de la rondelle de soutien (7) légèrement conique se rétrécit vers l'élément d'étanchéité (6) ou à partir de l'élément d'étanchéité (6).

4. Injecteur «Common Rail» selon l'une quelconque des revendications précédentes,
**caractérisé en ce que**
la rondelle de soutien (7) a sa périphérie extérieure légèrement conique.

5. Injecteur « Common Rail » selon l'une quelconque des revendications précédentes,
**caractérisé par**
des rainures de fuite (8, 9, 10, 11) dans le dispositif de soutien (7).

6. Injecteur « Common Rail » selon la revendication 5,
**caractérisé en ce que**
les rainures de fuite (8, 9, 10, 11) sont prévues sur le côté du dispositif de soutien (7) opposé à l'élément d'étanchéité (6).
